# EUROPEAN PATENT APPLICATION

(11) **EP 4 372 576 A1**
(43) Date of publication of application: **22.05.2024**
(21) Application number: 23210013.1
(22) Date of filing: 15.11.2023
(51) Int. Cl.: G06F 15/78, G06F 15/167, G06F 15/173

(54) **SENSOR DATA ACCESS SYSTEM**

(30) Priority: 17.11.2022 CN 202211460135
(71) Applicant: Nanjing SemiDrive Technology Ltd., Technoloy Research & Innovation Park, Jiangbei New Area, Nanjing (CN)
(72) Inventor: FENG, Tao, Nanjing (CN)
(74) Representative: Ziebig Hengelhaupt Intellectual Property Attorneys Patentanwaltskanzlei PartGmbB

(57) **Abstract**

Present application relates to a sensor data access system, a sensor data access system comprising a plurality of domains including plurality of hardware domains and at least one sensor hardware domain on a system-on-chip. Each domain is hard-isolated from another domain. The sensor hardware domain is connected with the plurality of hardware domains respectively through inter-processor communication module, the sensor hardware domain has at least one sensor module. The sensor module is used for receiving sensor data for autonomous driving. The plurality of the hardware domains include a first hardware domain and a second hardware domain provided on the same system-on-chip. The first hardware domain acquires sensor data from the sensor hardware domain, and the second hardware domain also acquires sensor data from the sensor hardware domain. Sensor sharing can be achieved without importing virtual machine technology, thereby reducing the cost of implementing autonomous driving.

## Description

### TECHNICAL FIELD

The present application relates to the technical field of autonomous driving, especially to a sensor data access system.

### BACKGROUND

The Autonomous Driving System (ADS) aims to provide users with a convenient driving experience and improve driving safety. Currently, virtual machines (Hypervisors) are used in the autonomous driving system to provide isolation among the tasks by assigning different autonomous driving tasks to different virtual machines.

The virtual machine solution, while capable of achieving effective system isolation, consumes a significant amount of resources. Isolating multiple virtual machines for different autonomous driving tasks and running these tasks on separate virtual machines will greatly exacerbate the performance loss inherent in virtualization, posing a significant challenge for the support of embedded SoC performance.

It is also important that autonomous driving systems to ensure the real-time execution of algorithmic tasks. However, traditional operating systems (such as LINUX) are not designed for this purpose, making it difficult to meet real-time requirements. In modern autonomous driving systems, there are numerous asynchronous tasks, and an increasing number of sensors introduce various types of interrupts. These asynchronous tasks and interrupts can interrupt the execution of the current algorithm, compromising its real-time performance and posing serious safety risks to the system.

### SUMMARY

In order to address the shortcomings of the existing technology, the present application intends to provide a sensor data access system. Compared to the existing technology, sensor sharing can be achieved without importing virtual machine technology, thereby reducing the cost of implementing autonomous driving, and achieving sensor sharing of autonomous driving in a simple structure.

To achieve the above purpose, the present application provides a sensor data access system comprising a plurality of domains including plurality of hardware domains and at least one sensor hardware domain on a system-on-chip. Each domain is hard-isolated from another domain. The sensor hardware domain is connected with the plurality of hardware domains respectively through inter-processor communication module, the sensor hardware domain has at least one sensor module. The sensor module is used for receiving sensor data for autonomous driving. The plurality of the hardware domains comprise a first hardware domain and a second hardware domain provided on the same system-on-chip. The first hardware domain acquires sensor data from the sensor hardware domain, and the second hardware domain also acquires sensor data from the sensor hardware domain.

Further, out of the plurality of domains, a first domain comprises at least one master device and at least one slave device, the master device is connected with a first authority control module via a system bus, and the first authority control module is connected to the slave device.

Further, each domain further comprises at least one interrupt module, the interrupt module is configured to respond to interrupt events from the corresponding domain.

Further, the interrupt module in the sensor hardware domain responds to the interrupt event of sending and/or capturing data through the interface corresponding to the sensor module.

Further, the first domain comprises a first central processing unit, a second domain of the plurality of domains comprises a second central processing unit, the first central processing unit receives, via the system bus, access information to the first authority control module. The received access information comprises hardware domain identification information of the second domain, address space, and read/write operations. The first authority control module pre-stored an authentication information, which is used for verifying the access information. The first authority control module verify the received access information, and deny the second central processing unit to access to the first sensor module.

Further, the sensor module comprises a pulse width modulation module and/or a timer module corresponding to the ultrasonic radar sensor and the millimeter wave radar sensor.

Further, the sensor hardware domain comprises a second sensor hardware domain, the sensor module in the second sensor hardware domain comprises a camera data access module corresponding to the camera sensor.

Further, the first hardware domain further comprises a CANFD authority control module connected to the first central processing unit via the system bus and a CANFD module connected with the CANFD authority control module, and responds to the interrupt event corresponding to CANFD.

Further, the first central processing unit is a real-time processor for operating autonomous driving tasks with high real-time requirements.

Further, the domain further comprise an inter-processor communication module for enabling the domain to communicate and make data requests with another domain.

Further, the inter-processor communication module performs data transmission among the plurality of the domains through a virtual network adapter and/or a shared memory.

Furthermore, the sensor hardware domain is located within a functional safety hardware domain.

To achieve the above purpose, the present application also provides a vehicle on-board chip, which comprises the sensor data access system described as above.

To achieve the above purpose, the present application also provides a vehicle on-board apparatus, which comprises the vehicle on-board chip described as above.

With the sensor data access system and the method of the present application, it may acquire the required sensor information respectively from the sensor hardware domain having the sensor modules by the hardware domains, compared to existing virtual device sharing technologies, sensor data sharing can be achieved without importing virtual machine technology, thereby reducing the cost of implementing autonomous driving and achieving sensor data sharing for autonomous driving in a simple structure.

The other features and advantages of the present application will be elaborated on in subsequent instructions, and some of them will become apparent from the specification, or understood through the implementation of the present application.

### BRIEF DESCRIPTION OF THE DRAWINGS

The accompanying drawings are used to provide a further understanding of the present application and form a part of the specification. The drawings are used together with the embodiment of the present application to explain the present application and do not constitute a limitation on the present application. In the drawings:
Figure 1 is a structural schematic diagram of a sensor data access system according to an embodiment of the present application;
Figure 2 is a structural schematic diagram of a plurality of domains according to an embodiment of the present application;
Figure 3 is a schematic diagram of authority control based on domains according to an embodiment of the present application;
Figure 4 is a structural schematic diagram of a sensor data access system according to another embodiment of the present application;
Figure 5 is a configuration schematic diagram of the sensor data access system according to the present application;
Figure 6 is a schematic diagram of the inter-processor communication of the sensor data access system among domains according to the present application.

### DETAILED DESCRIPTION

Below, the embodiments of the present application will be explained in detail with reference to the attached drawings. Although some embodiments of the present application are shown in the drawings, it should be understood that the present application can be implemented in various forms and should not be interpreted as limited to the embodiments described here. On the contrary, these embodiments are provided for a more thorough and complete understanding of the present application. It should be understood that the accompanying drawings and embodiments of the present application are only for illustrative purposes and are not intended to limit the protection scope of the present application.

It should be understood that the various steps recorded in the method implementation of the present application can be executed in different orders and/or in parallel. In addition, the method implementation can include additional steps and/or omit the steps shown. The scope of the present application is not limited in this regard.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, an apparatus, system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects, the term "based on" refers to "at least partially based on". The term "an embodiment" represents "at least one embodiment". The term "another embodiment" means "at least one other embodiment". The term "some embodiments" means "at least some embodiments". The relevant definitions of other terms will be given in the following description.

It should be noted that the modifications of "a" and "a plurality of" mentioned in the present application are indicative rather than restrictive. Those skilled in the art should understand that, unless otherwise explicitly stated in the context, they should be understood as "one or more". "A plurality of" should be understood as two or more.

Below, the embodiments of the present application will be explained in detail with reference to the attached drawings.

### Embodiment 1

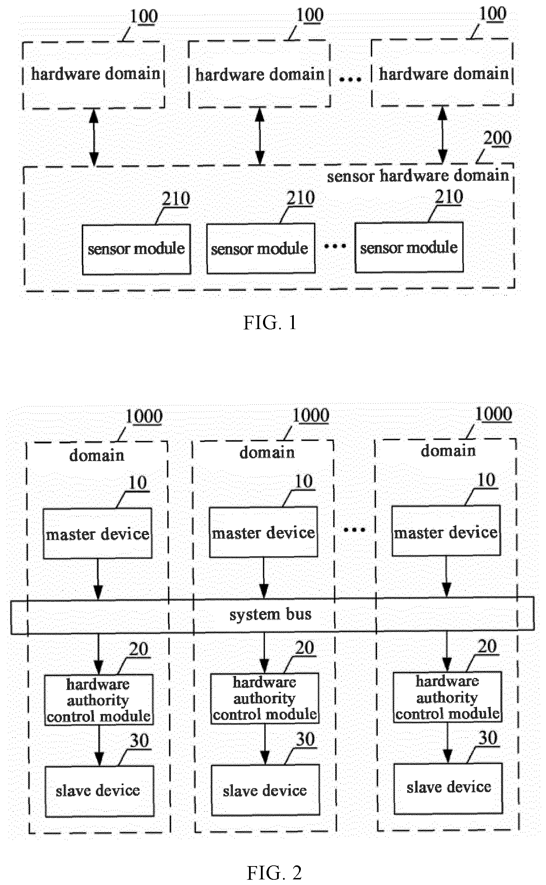

Figure 1 is a structural schematic diagram of a sensor data access system according to an embodiment of the present application. As shown in Figure 1, the sensor data access system of the present embodiment comprises a plurality of domains, including a plurality of hardware domains 100 (hardware domain I, hardware domain II ~ hardware domain n) provided on the same System-on-chip (SoC) for operating different autonomous driving tasks respectively and a sensor hardware domain 200. The sensor hardware domain 200 is connected to the plurality of hardware domains 100 respectively and includes a plurality of sensor modules 210. Each sensor module 201 acquires (collects) sensor information of the corresponding sensor installed on a vehicle body respectively. For example, the sensor information includes radar information, vehicle control information including vehicle speed and throttle opening, image data from the cameras, distance information, etc. The sensor hardware domain 200 and the plurality of hardware domains 100 are provided on the same system-on-chip. The sensor hardware domain 200 collects a plurality of sensor information and may performs algorithm operations on it. The sensor hardware domain 200 may comprises plurality of sensor modules 210, each sensor module acquires a specific kind of sensor data. In another embodiment of the present application, the sensor hardware domain 200 may consists of plurality of sensor hardware domains, each of which includes one or a plurality of sensor modules, and each sensor module is used for acquiring a specific kind of sensor data. The sensor information and/or operation results are provided from sensor hardware domain 200 to the plurality of hardware domains 100 through an inter-processor communication module (inter-processor communication mechanism) described later.

In addition, the sensor hardware domain 200 is located in a functional safety hardware domain within the system-on-chip and thus can provide higher data security redundancy for the system.

In an embodiment of the present application, the plurality of hardware domains 100 and the sensor hardware domain 200 each comprise a inter-processor communication module(inter-processor communication mechanism), the inter-processor communication module comprises a virtual network adapter. The plurality of hardware domains 100 and the sensor hardware domain 200 communicate with each other through the virtual network adapters. The plurality of hardware domains 100 may include a first hardware domain and a second hardware domain. The first hardware domain and the second hardware domain may acquire sensor data from the same sensor hardware domain, or the first hardware domain and the second hardware domain may acquire sensor data from different sensor hardware domains. In addition, in the present embodiment, communication between the plurality of hardware domains 100 and the sensor hardware domain 200 may be performed by means of other means, and no special restrictions are imposed here.

Next, the specific structure of each domain 1000 in an embodiment of the present application will be explained. Figure 2 is a structural schematic diagram of a plurality of domains 1000 according to an embodiment of the present application. As shown in Figure 2, the plurality of domains 1000 (domain I, domain II ~ domain n) of the sensor data access system of the present embodiment each comprises a master device 10 and a slave device 30. Specificly, hardware authority control module 20 may not a part of hardware domain 100, in some embodiments, it belongs to another domain, for example, functional safety domain(not shown) or sensor hardware domain 200 (as shown in Figure. 1), which has a higher level of security and boots ahead of hardware domains 100 when system start up, it may be configured to the same domain with the sensor hardware domain 200, if the sensor hardware domain 200 is configured to the functional safety domain, it may also be configured in another functional safety domain different from the sensor hardware domain 200.

In the embodiment of the present application, domain 1000 could be hardware domain 100 or sensor hardware domain 200.

The master device 10 is a device that initiates the address space access, and is used to initiate the address space access, such as CPU (central processing unit), GPU (Graphics Processing Unit), DSP (Digital Signal Processing), DMA (Direct Memory Access), etc.

In an embodiment of the present application, the master device 10 will send request data on the bus with its own Domain ID (hardware domain identification) when initiating the address space access.

The hardware authority control module 20 is connected with the slave device 30, used to perform the authority control of access to address units (the slave device 30). In an embodiment of the present application, the hardware authority control module 20 is configured ahead of the master device 10 initiating the address space access, for example, at the system startup phase, the configuration sets the corresponding relationship between the master device 10 and the salve device 30, so that the master device 10 can only access the slave device 30 of the same domain 1000.

The slave device 30 is an address space used to be accessed by the master device 10 of the local (present) domain 1000, such as memory address, IP (Interrupt Priority) register address, for example, I2C (Inter Integrated Circuit) register. The slave device 30 can only be accessed by the master device 10 of the same domain 1000.

In an embodiment of the present application, when the master device 10 accesses the slave device 30 through the hardware authority control module 20, the master device 10 sends information, including domain identification information, access space, and read/write operations and so on, to the hardware authority control module 20. The hardware authority control module 20 verifies the information including domain identification information, access space, and read/write operations and so on sent by the master device 10, so that the slave device 30 only allows to be accessed by the master device 10 in the same domain. In this way, the master device 10 and the slave device 30 in one domain 1000 is hard-isolated from those in another domain 1000. The hardware domain 100 and the sensor hardware domain 200 both works in this way.

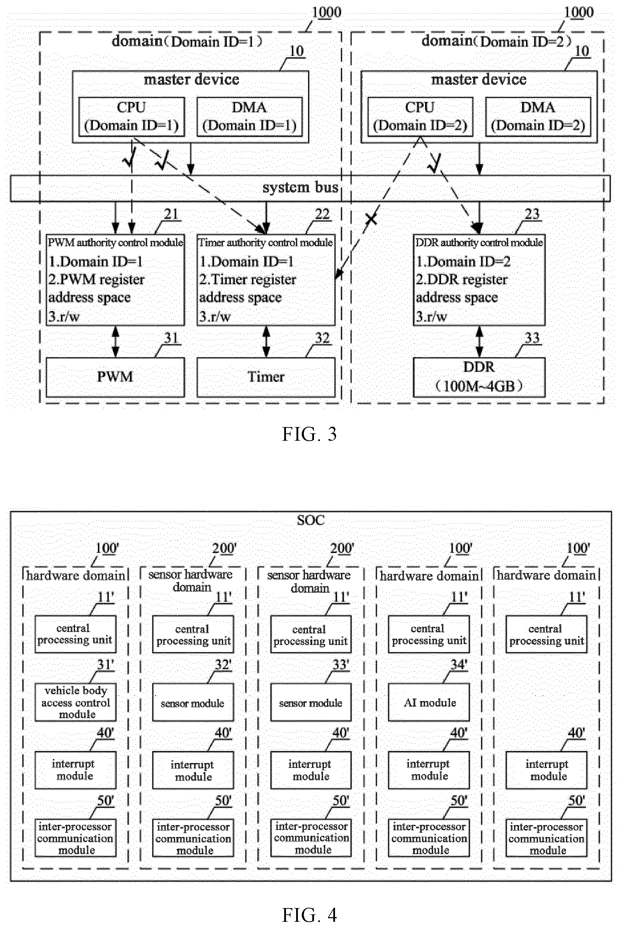

Figure 3 is a schematic diagram of authority control based on domains according to an embodiment of the present application. As shown in Figure 3, for example, a domain 1000 (e.g., but not limited to, sensor hardware domain I) includes the master device 10 (the master device I) containing a central processing unit I and a direct memory access I, two slave devices 30 (slave device II) specifically comprising a pulse width modulation (PWM) module 31 and a timer module 32, and two hardware authority control modules 20 (hardware authority control module I) corresponding to these two slave devices 30 respectively, which specifically comprise a pulse width modulation authority control module 21 and a timer authority control module 22. Another domain 1000 (hardware domain II) includes a master device 10 (the master device II) containing a central processing unit II and a direct memory access II, a slave device 30 (slave device II) that specifically is a Double Data Rate Synchronous Dynamic Random Access Memory (DDR) module 33 with an address space of 100M-4GB, and a hardware authority control module 20 (hardware authority control module II) corresponding to this slave device 30 that specifically is a double data rate synchronous dynamic random access memory authority control module 23.

The master device 10 will carry hardware domain identification information on the bus when initiating address space access. The hardware domains to which the slave device I and the slave device II belong respectively may be defined by configuring the hardware authority control register, so as to ensure that the slave device I can only be accessed by the master device I belonging to the same hardware domain I, and the slave device II can only be accessed by the master device II belonging to the same hardware domain II. For example, as shown in Figure 3, the registers of the pulse width modulation authority control module 21 and the timer authority control module 22 are set to have a hardware domain ID 1; the register of the double data rate synchronous dynamic random access memory authority control module 23 is set to have a hardware domain ID 2. As a result, the central processing unit I can access the pulse width modulation module 31 and the timer module 32 belonging to the same hardware domain I, but cannot access the Double Data Rate Synchronous Dynamic Random Access Memory (DDR) module 33 belonging to the hardware domain II. On the contrary, the central processing unit II can access the Double Data Rate Synchronous Dynamic Random Access Memory (DDR) module 33 belonging to the same hardware domain II, but cannot access the pulse width modulation module 31 and the timer module 32 belonging to the hardware domain I.

In an embodiment of the present application, the sensor data access system may also include a resource configuration unit (not shown) in functional safety domain, which is used to allocate the master device 10 within the system-on-chip to different hardware domains (plus Domain ID) as needed during the startup phase, and to configure the hardware authority control module connected to the slave device 30 so that it only allow access with specific Domain IDs, thereby achieving the goal of allocating the slave device 30 to the specific hardware domain.

In an embodiment of the present application, the resource configuration unit configures the master device 10 to cause it to carry hardware domain identification information while transmitting data on the bus and configures the hardware authority control module 20 before the slave device 30 to enable it to be accessed only by the master device 10 with a specific hardware domain identifier. In this way, the master device 10 and the slave device 30 in one domain 1000 is hard-isolated from those in another domain 1000, the slave device 30 in one domain 1000 cannot be accessed by the master device 10 of another domain 1000. The hardware domain and sensor hardware domain works in the same way.

In an embodiment of the present application, an example is provided to illustrate the inclusion of one hardware domains and one sensor hardware domain, but the present application is not limited to this and may include more than two hardware domains and more than two sensor hardware domains.

### Embodiment 2

Figure 4 is a structural schematic diagram of a sensor data access system according to another embodiment of the present application. As shown in Figure 4, the sensor data access system of the present embodiment comprises a plurality of hardware domains 100' (hardware domain I, hardware domain IV and hardware domain V) and a plurality of sensor hardware domains 200'(hardware domain II and hardware domain III) provided on the same system-on-chip. Each hardware domains 100' and each sensor hardware domains 200' comprises an independent central processing unit 11' respectively. Specifically, the hardware domain I comprises a real-time processor I, the sensor hardware domain II comprises a real-time processor II, the sensor hardware domain III comprises an application processor III, the hardware domain IV comprises an application processor IV, and the hardware domain V comprises an application processor V. Therefore, each hardware domain 100' and sensor hardware domain 200' can perform independent task schedule without affecting each other. The hardware domains I and sensor hardware domain II containing the real-time processors I, II, it may be configured to run tasks with high real-time requirements into the hardware domains I and sensor hardware domain II. For example, a vehicle control requires a real-time central processing unit, such as Cortex-R5, and also requires a real-time operating system, for example, AutoSAR (Automotive Open System Architecture). The sensor hardware domains III and hardware domain IV and V containing the application processors III, IV, V, it may be configured to run perception and planning tasks that require significant computational power into sensor hardware domains III and hardware domain IV and V.

In the present embodiment, the real-time processors I and II are ARM Cortex-R series processors, such as the Cortex-R5, but are not limited to this, as long as they can be used for autonomous driving tasks with high real-time requirements.

In the present embodiment, the application processors III, IV, and V are ARM Cortex-A series processors, such as the Cortex-A55, but are not limited to this, as long as they can be used for operating perception and planning tasks that require significant computational power.

Autonomous driving may be divided into six levels based on driving assistance. Specifically, L0 level represents no automation, which means the vehicle is entirely operated by a human. At this level, the vehicle has no automation capabilities, and all operations are the responsibility of the driver. L1 level (driver assistance) represents that the driving is mainly operated by the driver. At the L1 level, the driving system will assist automatically in appropriate situations, but in specific situations, the system will intervene, and this driving technology is mainly aimed at improving driving safety. L2 level (partial autonomous driving), the driving technology of which is mainly aimed at enhancing directional control. At L2 level, when a car deviates during travel, it will prompt the driver to correct the direction and pull the vehicle back into the lane where it is traveling. At L3 level (autonomous driving confined by conditions), it can make decisions based on information, such as accelerating and passing through a slow-moving vehicle. However, this level still requires a human operation and control, and the driver must remain alert and operate when the system is unable to perform tasks. L4 level (highly autonomous driving) presents a high degree of automation. At L4 level, the car can be driven comprehensively according to the set route after startup, without the need for driver operation. At L5 level (complete autonomous driving), during the driving process of the car, there is no need for manual operation, and the vehicle is driven through the perception and calculation of the on-board computer. In the embodiment of the present application, autonomous driving can be at least one of L1 to L5, but not limited to this.

In addition, each hardware domain (hardware domain I, hardware domain IV and hardware domain V) 100' and each sensor hardware domain (sensor hardware domain II and sensor hardware domain III) 200' comprises an interrupt module (interrupt module I ~ interrupt module V) 40'. The interrupt module 40' is used to respond to the interrupt event from the domain 100' or domain 200' to which it belongs. The interrupt events of another domain do not affect the interrupt module of the domain it belongs. As an example, the frequently generated interrupt events in sensor hardware domain 200', will be handled by the interrupt module in sensor hard ware domain 200', but will not interrupt the execution of the current algorithm in the hardware domain I, IV or V, and thus will not posing serious safety risks to the system, either.

In addition, each domain comprises an inter-processor communication module (inter-processor communication module I ~ inter-processor communication module V) 50'. The inter-processor communication module 50' is used to support each hardware domain (hardware domain I, hardware domain IV and hardware domain V) 100' and each sensor hardware domain (sensor hardware domain II and sensor hardware domain III) 200' to communicate with each other, The domains are hard-isolated from each other, the inter-processor communication module provides a channel for information exchange between different domains. The access information includes domain identification information, the inter-processor communication module is configured to allow the reception and response to access information containing the domain identification information of other domains. It provides channel to perform the information exchange within the system-on-chip between different domains, with better security, higher speed, and improved real-time performance compared to inter-chip information transmission.

Specifically, in an embodiment of the present application, the hardware domain I further comprises a vehicle body access control module I corresponding to 31' in Figure 4.

Specifically, in an embodiment of the present application, the sensor hardware domain II (the first sensor hardware domain) further comprises a sensor module II (the first sensor module) corresponding to 32' in Figure 4..

Specifically, in an embodiment of the present application, the sensor hardware domain III (the second sensor hardware domain) further comprises a sensor module III (the second sensor module) corresponding to 33' in Figure 4.

Specifically, in an embodiment of the present application, the hardware domain IV further comprises an AI (Artificial Intelligence) module IV corresponding to 34' in Figure 4, the AI module IV may be NPU (Neural Network Processing Unit), graphics processor, Vision DSP (Digital Signal Processor), etc.

One or more sensor hardware domains are allowed, the scope of the present application is not limited in this regard.

In addition, in an embodiment of the present application, the interrupt module 40' may be a GIC (Generic Interrupt Controller). It may be possible that the interrupt module 40' is properly provided based on functional safety requirements.

In an embodiment of the present application, the inter-processor communication module 50' may comprise but not limited to at least one of : a Mailbox controller, which is a mechanism and data structure used for communication between different processing units, and can be used to implement data exchange between processor cores, suitable for fast and reliable transmission of small data like control command data; a shared memory controller, which is used to share a part of memory(inside the chip or outside the chip) between different domains, suitable for share large amount of data between the domains.

In an embodiment of the present application, the sensor module 32' may comprise a pulse width modulation module and a timer module required for ultrasonic radar data acquisition and/or a CANFD for millimeter wave radar data acquisition, the sensor module 32' receives ultrasonic radar data and/or millimeter wave radar data from the ultrasonic radar and/or millimeter wave radar on the vehicle. The sensor module 33' may comprise a camera data access module, specifically, the camera data access module may include a MIPI (Mobile Industry Processor Interface) _CSI (Camera Serial Interface) interface required for camera data collection, the sensor module 33' receives camera data from the cameras on the vehicle.

In an embodiment of the present application, the hardware domain I acquires the sensor data from the sensor hardware domain II, specifically, the vehicle body access control module I corresponding to 3 1' in Figure 4, acquires ultrasonic radar data and/or millimeter wave radar data from sensor hardware domain II through inter-processor communication module 50' of the hardware domain I and the sensor hardware domain II. The hardware domain IV acquires the sensor data from the sensor hardware domain III, specifically, the AI module I corresponding to 34' in Figure 4, acquires camera data from sensor hardware domain III through inter-processor communication module 50' of the hardware domain IV and the sensor hardware domain III. The hardware domain V acquires the sensor data from the sensor hardware domain III, specifically, the hardware domain V in Figure 4, acquires camera data from sensor hardware domain III through inter-processor communication module 50' of the hardware domain V and the sensor hardware domain III. The hardware domain V may also acquire data from the hardware domain I and the hardware domain IV.

As a result, the corresponding sensor data collection tasks may be configured to run in these sensor hardware domains II and III to reduce the break-in of frequent interruptions in the sensor data collection process to other autonomous driving tasks, such as the perception algorithm module and the planning module. In addition, generally, a driving plan will be coupled to a multi-channel ultrasonic radar, wherein data acquisition waveforms are transmitted through the hardware interface of the pulse width modulation, and the data is captured through the interface of the timer. This process generates a large number of interrupt events. By configuring the sensor hardware domains II and III to have the independent interrupt controllers II and III, only interrupt events from the hardware domains II and III can be responded, thereby reducing the break-in of the interruptions to other autonomous driving algorithm tasks, and enhancing the real-time performance of autonomous driving tasks. For example, the interrupt module II only responds to interrupt events occurring in the process of transmitting data acquisition waveforms through the interface corresponding to the pulse width modulation module and capturing data through the interface corresponding to the timer module. The interrupt module III only responds to the interrupt event corresponding to the CANFD. In the present embodiment, the interrupt event corresponding to the CANFD occurs in the sensor hardware domain, but is not limited to this.

In addition, an example is provided in the present embodiment where each hardware domain has an interrupt module. However, it may also be based on functional safety requirements, where at least some hardware domains with high functional safety requirements include interrupt modules, but are not limited to this.

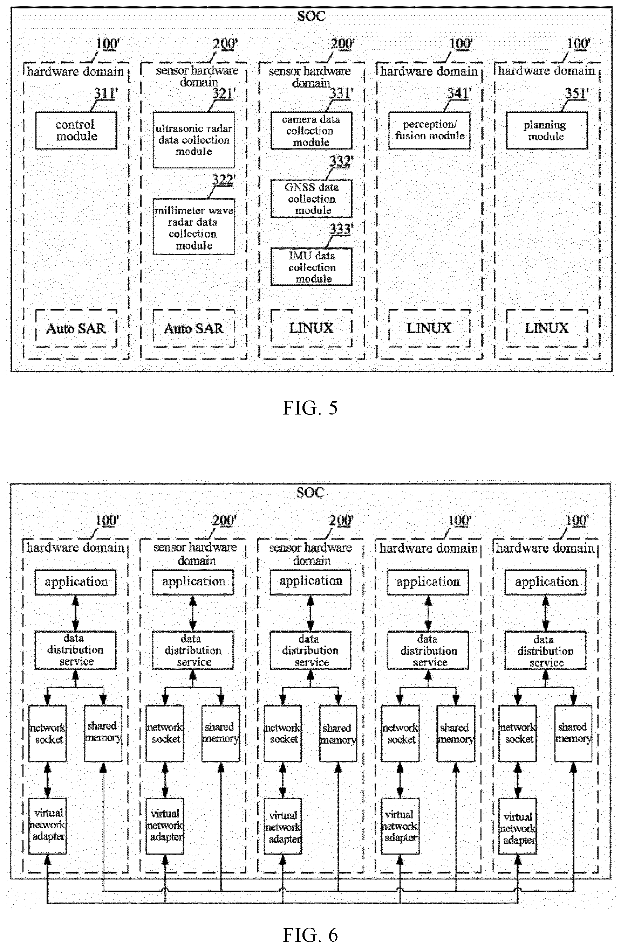

Figure 5 is a schematic configuration diagram of the sensor data access system according to the present application. As shown in Figure 5, the hardware domain I includes a control module 311', which controls the vehicle through the output of a planning module 351' of the hardware domain V descried later. Therefore, the hardware domain Imay include a real-time central processing unit (such as ARM Cortex-R5) and uses real-time kernels (such as AutoSAR). The sensor hardware domain II comprises a sensor module, specifically, an ultrasonic radar data collection module 321' and a millimeter wave radar data collection module 322' for collecting radar data. The sensor hardware domain II further comprises a real-time central processing unit (such as, ARM Cortex-R5) and uses real-time kernels (such as, AutoSAR), so as to ensure the hard real-time collection of the ultrasonic radar and the millimeter wave radar data. The sensor hardware domain III comprises a sensor module, specifically, a camera data collection module 331' for camera data acquisition, a GNSS (Global Navigation Satellite System) data acquisition module 332' for positioning data acquisition, and an IMU (Inertial Measurement Unit) data collection module 333' for preprocessing. The sensor hardware domain III further comprises a high-performance processor (such as, ARM Cortex-A55) and uses soft real-time kernels (such as, LINUX (operating system kernel)). The hardware domain IV comprises an AI module, specifically, a perception/fusion module 341' for running various AI inference operations on the collected sensor data, and the hardware domain IV mainly comprises artificial intelligence hardware (such as NPU, GPU, Vision DSP, etc.) and a high-performance processor (such as ARM Cortex-A55). The hardware domain V comprises a planning module 351' that makes a corresponding planning decision based on the surrounding environment perception information output from the perception/fusion module 341' of the hardware domain IV and the vehicle status information output from the hardware domain I and/or the sensor hardware domain III. The planning decision includes a path planning, a behavioral decision-making, an operational planning, etc. The hardware domain V further comprises a high-performance processor (such as ARM Cortex-A55) and uses a soft real-time kernel (such as LINUX).

The above autonomous driving tasks are located in different hardware domains, eliminating mutual interference between different autonomous driving tasks:
(1) The impact by the frequent interrupt occurring in the collection process of the multi-channel camera data on the perception/fusion module is eliminated.
(2) The perception/fusion module and the planning module are located in different hardware domains, and the scheduling of perception/fusion algorithm tasks does not affect the execution of the tasks by the planning module.
(3) The control module and the radar data acquisition module with high real-time requirements are located in different real-time central processing units and run on the real-time kernel, fully satisfying the real-time requirements of the above modules and shielding the operation of high real-time modules from the interference by the modules with lower real-time requirements for autonomous driving.

In an embodiment of the present application, examples of configuring sensor modules on different sensor hardware domains respectively based on functional safety requirements are explained, but all sensor modules can also be configured on the same sensor hardware domain, such as the sensor hardware domain II in Figure 5.

Figure 6 is a schematic diagram of the inter-processor communication of the sensor data access system according to the present application. As shown in Figure 6, each autonomous driving task runs independently in its own hardware domain 100' and sensor hardware domain 200', and passes necessary data to each other through the inter-processor communication module 50'. Regarding each hardware domain 100' (hardware domain I, hardware domain IV and hardware domain V) and each sensor hardware domain 100' (hardware domain II and hardware domain III), the application can call the data distribution service (such as DDS (Direct Digital Frequency Synthesis)) to call directly the network socket interface to complete data interaction among multiple hardware domains and sensor hardware domains. In addition, the data distribution service is based on network services and/or a shared memory, where the underlying network service is through a virtual network adapter, which is based on inter-hardware domain communication hardware mailbox and a shared memory.

According to the sensor data access system of the aforementioned embodiments, it acquires the required sensor information from the sensor hardware domain having the plurality of sensor modules through the plurality of hardware domains, compared to existing virtual device sharing technologies, sensor sharing can be achieved without importing virtual machine technology, thereby reducing the cost of implementing autonomous driving and achieving sensor sharing for autonomous driving in a simple structure.

According to the sensor data access system of the aforementioned embodiments, since it acquires the required sensor information from the sensor hardware domain having the plurality of sensor modules through the plurality of hardware domains, when an abnormality occurs in one hardware domain in the plurality of hardware domains, it does not affect other hardware domains on acquiring sensor information, thereby making autonomous driving more stable and secure.

According to the sensor data access system of the aforementioned embodiments, by allocating autonomous driving tasks to different hardware domains through hard isolation, and causing each hardware domain to only respond to the interrupt event of its own hardware domain, it has better real-time and robustness compared to software methods (such as virtual machine or enhanced operating system real-time), and does not require importing complex virtual machine environments or dealing with mutual interference between autonomous driving tasks. Furthermore, the cost of software development is relatively low.

According to the sensor data access system of the aforementioned embodiments, by configuring the real-time central processing unit and the interrupt module for at least the hardware domains to which the part that collects data for advanced autonomous driving belong, it is possible to avoid interference from interrupt events of other hardware domains on autonomous driving tasks that require high functional safety, improve real-time performance and robustness, and thereby improve autonomous driving security.

According to the sensor data access system of the aforementioned embodiments, by dividing a single SoC into different hardware domains and assigning different hardware according to the requirements of autonomous driving tasks in the hardware domains, the autonomous driving tasks are assigned to different hardware domains for operation. Data is exchanged among the individual domains through interdomain communication systems, thereby reducing the mutual interference of autonomous driving tasks, and enhancing the real-time and robustness of autonomous driving tasks.

### Embodiment 3

In an embodiment of the present application, a vehicle on-board chip is also provided, which comprises the sensor data access system of the above embodiments.

### Embodiment 4

In an embodiment of the present application, an electronic device is also provided, which comprises the vehicle on-board chip of the above embodiments.

Those skilled in the art will understand that the above are only preferred embodiments of the present application, and are not intended to limit the present invention. Although the present application has been described in detail with reference to the aforementioned embodiments, those skilled in the art can make modifications to the technical solutions recorded in the aforementioned embodiments or equivalent replacements to some of the technical features. Any modifications, equivalent replacements, improvements, etc. made within the spirit and principles of the present application shall be regarded as falling within the scope of protection of the present application.

## Claims

1. A sensor data access system, **characterized by** comprising a plurality of domains, including a plurality of hardware domains and at least one sensor hardware domain on a system-on-chip;
wherein, each domain is hard-isolated from another domain;
the sensor hardware domain is connected with the plurality of hardware domains respectively through inter-processor communication module, the sensor hardware domain has at least one sensor module, which is used for receiving sensor data for autonomous driving;
the plurality of the hardware domains comprise a first hardware domain and a second hardware domain provided on the same system-on-chip;
the first hardware domain acquires sensor data from the sensor hardware domain, and the second hardware domain also acquires sensor data from the sensor hardware domain.

2. The sensor data access system according to claim 1, **characterized in that**,
a first domain of the plurality of domains comprises at least one master device and at least one slave device, the master device is connected with a first authority control module via a system bus, and the first authority control module is connected to the slave device.

3. The sensor data access system according to claim 2, **characterized in that**,
each domain further comprises at least one interrupt module, the interrupt module is configured to respond to interrupt events from the corresponding domain.

4. The sensor data access system according to claim 3, **characterized in that**,
the interrupt module in the sensor hardware domain responds to the interrupt event of sending and/or capturing data through the interface corresponding to the sensor module.

5. The sensor data access system according to claim 2, **characterized in that**,
the first domain comprises a first central processing unit, a second domain of the plurality of domains comprises a second central processing unit, the first central processing unit receives, via the system bus, access information to the first authority control module, wherein, the received access information comprises a hardware domain identification information of the second domain, address space, and read/write operations;
the first authority control module pre-stored an authentication information, which is used for verifying the access information;
the first authority control module verify the received access information, and deny the second central processing unit to access to the first sensor module.

6. The sensor data access system according to any one of claims 1-5, **characterized in that**,
the sensor module comprises a pulse width modulation module and/or a timer module corresponding to the ultrasonic radar sensor and the millimeter wave radar sensor.

7. The sensor data access system according to claim 6, **characterized in that**,
the sensor hardware domain comprises a second sensor hardware domain, the sensor module in the second sensor hardware domain comprises a camera data access module corresponding to the camera sensor.

8. The sensor data access system according to claim 5, **characterized in that**,
the first hardware domain further comprises a CANFD authority control module connected to the first central processing unit via the system bus, a CANFD module connected with the CANFD authority control module, and responds to the interrupt event corresponding to CANFD.

9. The sensor data access system according to claim 5, **characterized in that**,
the first central processing unit is a real-time processor for operating autonomous driving tasks with high real-time requirements.

10. The sensor data access system according to claim 1, **characterized in that**,
the domain further comprise an inter-processor communication module for enabling the domain to communicate and make data requests with another domain.

11. The sensor data access system according to claim 10, **characterized in that**,
the inter-processor communication module performs data transmission among the plurality of the domains through a virtual network adapter and/or a shared memory.

12. The sensor data access system according to claim 1, **characterized in that**,
the sensor hardware domain is located within a functional safety hardware domain.

13. The sensor data access system according to claim 5, **characterized in that**,
the second central processing unit is an application processor for operating autonomous driving tasks that require significant computational power.

14. A vehicle on-board chip, **characterized by** comprising the sensor data access system according to any one of claims 1-13.

15. A vehicle on-board apparatus, **characterized by** comprising the vehicle on-board chip according to claim 14.
